**Europäisches Patentamt**

(19) **European Patent Office**

**Office européen des brevets**

(11) Numéro de publication : **0 327 774 B1**

(12) **FASCICULE DE BREVET EUROPEEN**

(45) Date de publication du fascicule du brevet :
13.03.91 Bulletin 91/11

(51) Int. Cl.⁵ : **F16K 47/08**

(21) Numéro de dépôt : **88403341.6**

(22) Date de dépôt : **28.12.88**

(54) **Dispositif de fuite pour vidange d'un accumulateur à membrane.**

(30) Priorité : 05.02.88 FR 8801331
28.04.88 FR 8805656

(43) Date de publication de la demande :
16.08.89 Bulletin 89/33

(45) Mention de la délivrance du brevet :
13.03.91 Bulletin 91/11

(84) Etats contractants désignés :
DE ES FR GB IT

(56) Documents cités :
AU-B- 443 724
BE-A- 639 381
DE-C- 645 808
DE-C- 858 054
FR-A- 2 431 646
US-A- 1 510 802
Hydraulics & Pneumatics, no.7, 1980, p. 22-23,
Cleveland, Ohio, US; Ideas and Applications :
"log splitter accumulator unloading"

(73) Titulaire : BENDIX EUROPE Services
Techniques S.A.
126 rue de Stalingrad
F-93700 Drancy (FR)

(72) Inventeur : Knuchel, Pierre
Bendix France 126 rue de Stalingrad
F-93700 Drancy (FR)
Inventeur : Nollez, Jacques
Bendix France 126 rue de Stalingrad
F-93700 Drancy (FR)

(74) Mandataire : Lejet, Christian
Bendix Europe Service Techniques Service
Brevets 126 rue de Stalingrad
F-93700 Drancy (FR)

Jouve, 18, rue Saint-Denis, 75001 PARIS

## Description

Dans les systèmes hydrauliques sous pression, comme on en trouve de plus en plus fréquemment dans les véhicules automobiles en raison de la multiplication des dispositifs d'assistance de fonctions diverses et/ou de contrôle du freinage, on prévoit des accumulateurs de pression dont le rôle est de stocker une certaine quantité de liquide sous pression entre les périodes de fonctionnement de la pompe.

Ces accumulateurs sont réalisés couramment sous la forme d'un boîtier divisé en deux chambres par une membrane, l'une des chambres étant fermée et contenant un gaz sous pression, et l'autre chambre étant pourvue d'un orifice permettant son raccordement au circuit de fluide sous pression, au voisinage du refoulement de la pompe.

On a constaté que, malgré le soin et les perfectionnements apportés a la réalisation de la membrane, celle-ci présente un certain degré de perméabilité pour les gaz qui, par suite, se dégagent petit à petit dans le liquide en risquant de provoquer des disfonctionnements des systèmes hydrauliques dont les conséquences peuvent être graves.

On a constaté qu'un tel dégagement de gaz dans le liquide est ramené à une valeur négligeable chaque fois que la surface de membrane en contact avec le liquide est pratiquement nulle. Or, une telle situation se produit lorsque la pression du liquide est ramenée à une valeur pratiquement nulle, c'est-à-dire au voisinage de la pression atmosphérique, et que la membrane vient s'appliquer intimement contre les parois de l'accumulateur du côté de la chambre réservée au liquide si bien que la seule zone de contact entre la membrane et le liquide est celle de l'orifice de raccordement vers le circuit hydraulique.

Le but de la présente invention est donc d'assurer une telle déplétion de l'accumulateur aussi fréquemment et aussi longtemps que possible, notamment lorsque le véhicule n'est pas en fonctionnement.

Dans Hydraulics & Pneumatics, n°7, juillet 80, pages 22-23, Cleveland, Ohio, US, est décrit un procédé de vidange d'un accumulateur à membrane dont la membrane est susceptible de s'appliquer contre au moins une partie de la paroi interne de l'accumulateur en l'absence de pression. Selon le procédé, l'accumulateur est disposé dans un circuit hydraulique comprenant un réservoir à basse pression, et l'on maintient une fuite du liquide depuis le circuit vers le réservoir à basse pression, sous un débit prédéterminé.

De la sorte, chaque fois que le véhicule est hors fonctionnement, la fuite de liquide depuis le circuit hydraulique et l'accumulateur jusqu'au réservoir basse pression a pour effet de ramener progressivement la pression dans la chambre à liquide de l'accumulateur à une valeur voisine de la pression atmosphérique et l'application de la membrane de l'accumulateur intimement contre les parois de l'accumulateur, restreignant la zone de contact entre le liquide et la membrane à celle de l'orifice de raccordement vers le circuit.

Bien entendu, le débit prédéterminé de fuite du liquide constant ou variable, est choisi inférieur au débit de refoulement de la pompe de mise sous pression afin de ne pas empêcher la mise sous pression du liquide, et même nettement inférieur afin de ne pas provoquer une déplétion trop rapide de l'accumulateur en cours de fonctionnement et des remises en route trop fréquentes de la pompe qui se traduiraient par une augmentation de la consommation énergétique.

L'invention propose un dispositif de fuite destiné à la mise en oeuvre de ce procédé. Selon l' invention, ce dispositif de fuite comprend un corps pourvu d'une chambre, un orifice d'entrée destiné à être relié au circuit hydraulique, un orifice de sortie destiné a être relié au réservoir à basse pression et un plongeur monté dans la chambre, le plongeur comprenant des moyens calibrés définissant un trajet de fuite entre l'orifice d'entrée et l'orifice de sortie.

L'invention sera mieux comprise à la lecture de la description qui va suivre en se référant aux dessins annexés, dans lesquels :

– la figure 1 est une représentation schématique d'un circuit hydraulique sous pression conforme à l'invention ;
– la figure 2 est une vue en coupe d'un dispositif de fuite incorporé au circuit de la figure 1 ;
– les figures 3a et 3b sont des vues en coupe de détail, prises suivant la ligne 3-3 de la figure 2 et illustrant deux variantes de réalisation ;
– la figure 4 est une vue en coupe analogue à celle de la figure 2 et illustrant un autre mode de réalisation du dispositif de fuite ; et
– la figure 5 est une vue en coupe d'un autre mode de réalisation du dispositif.

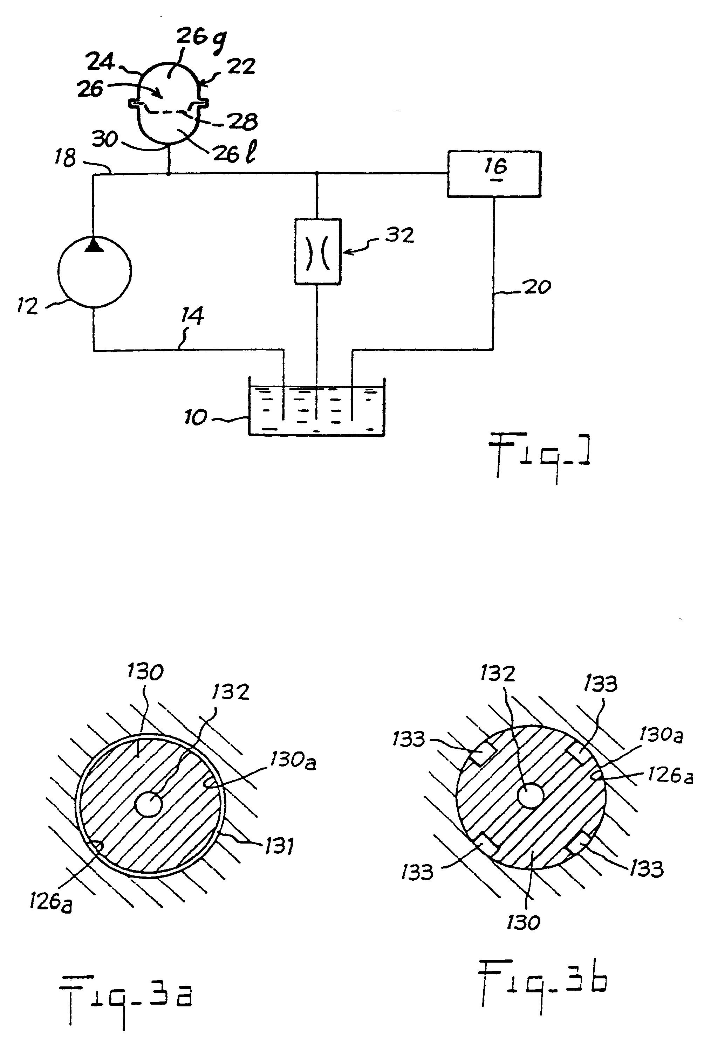

Le circuit hydraulique représenté de manière schématique figure 1 comprend un réservoir 10 de liquide sous basse pression, par exemple la pression atmosphérique, une pompe 12 qui aspire le liquide dans le réservoir 10 via une conduite 14 et le refoule sous haute pression en direction de dispositifs utilisateurs, symbolisés globalement sous la référence 16, via une conduite 18.

Les dispositifs utilisateurs 16 sont reliés au réservoir basse pression au moyen d'une conduite de retour 20 afin de renvoyer vers ce réservoir le liquide lors du fonctionnement des dispositifs utilisateurs.

Comme bien connu, la pompe est mise en route chaque fois que la pression dans le circuit chute audessous d'un seuil minimal et arrêté lorsque la pression dépasse un seuil maximal.

De plus, le circuit comprend un accumulateur 22, branché en dérivation sur la conduite de refoulement 18, afin de stocker une certaine quantité de liquide sous pression et permettre une certaine autonomie d'alimentation des dispositifs d'utilisation 16 en dehors des périodes de fonctionnement de la pompe 12.

L'accumulateur 22 est du type à membrane. Sa description détaillée n'est pas nécessaire et il sera simplement dit dans la présente description que l'accumulateur comprend un boîtier 24 définissant intérieurement une cavité 26 subdivisée en deux chambres 26g, 261 par une membrane 28.

La cavité 26g est remplie d'un gaz sous pression, de préférence un gaz neutre comme par exemple l'azote, et la chambre 261 communique avec la conduite 18 via un orifice 30.

Selon la pression du liquide dans la conduite 18, une certaine quantité de liquide pénètre dans la chambre 261 en repoussant la membrane 28 jusque dans une position dans laquelle les pressions du gaz et du liquide sont pratiquement égales.

En l'absence de pression dans la conduite 18, la membrane est complètement repoussée vers la chambre à liquide 261 et s'applique intimement contre les parois du boîtier de sorte que le contact entre la membrane et le liquide est réduit à une zone d'aire négligeable face à l'orifice 30. Ainsi, le dégagement du gaz en direction du liquide est pratiquement évité chaque fois que la membrane occupe une telle position.

A cette fin, on prévoit de maintenir une fuite constante de liquide depuis la conduite 18 et donc depuis l'accumulateur 22, en direction du réservoir basse pression 10, au moyen d'un dispositif de fuite 32, lequel est interposé entre la conduite 18 et le réservoir 10.

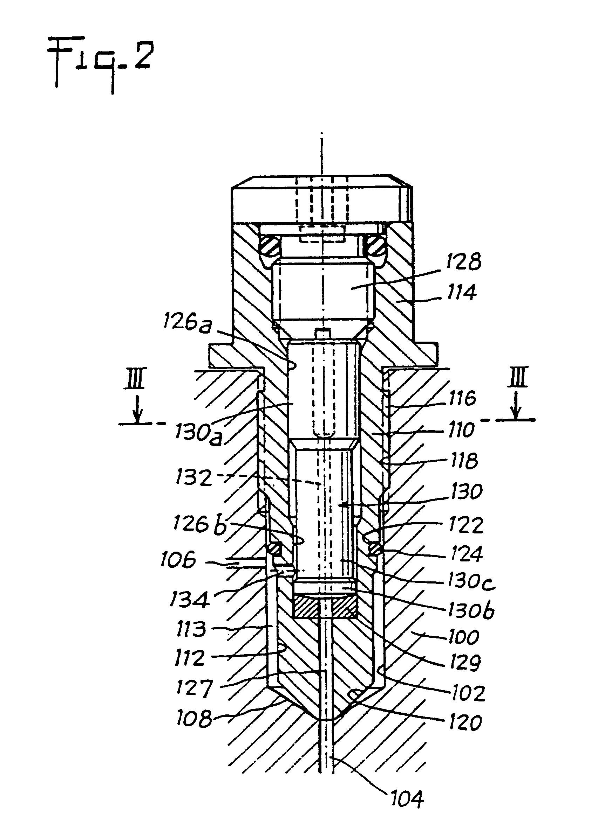

Selon le premier mode de réalisation illustré en coupe figure 2, le dispositif de fuite comprend un corps 100, percé d'un alésage borgne 102 formant une chambre et pourvu d'un orifice d'entrée 104 débouchant en fond d'alésage et d'un orifice de sortie 106 débouchant latéralement dans l'alésage. Au débouché de l'orifice d'entrée 104 est ménagé un siège conique 108.

Dans l'alésage 102 est monté un plongeur 110 ayant un fût cylindrique 112 terminé par une tête 114 et munie d'un filetage 116 au voisinage de la tête, permettant son vissage dans une partie taraudée 118 de l'alésage.

L'extrémité du plongeur 110 a un profil conique 120 qui vient porter de façon étanche contre le siège conique 108. Entre la partie cylindrique du fût et son filetage est prévue une gorge périphérique 122 recevant un joint torique 124 qui assure l'étanchéité entre le plongeur et l'alésage au-delà de l'orifice de sortie 106.

Lorsque le plongeur est dévissé, son extrémité conique 120 est dégagée du siège 108, mettant ainsi en libre communication l'orifice d'entrée 104 avec l'orifice de sortie 106, via l'espace 113 séparant le fût 112 de l'alésage 102. Ceci permet de décharger rapidement la pression du circuit de refoulement de la pompe et de l'accumulateur, par exemple en cas de réparation. En général, le dispositif sera placé au point le plus haut du circuit et remplira alors également le rôle d'un dispositif de purge classique, et on notera la similitude de structure par rapport à un tel dispositif.

Le plongeur 110 comprend des moyens visant à maintenir une fuite permanente de liquide entre l'orifice d'entrée 104 et l'orifice de sortie 106.

Comme on le remarque figure 2, le plongeur comprend un alésage étagé 126 formé d'une première partie large 126a et d'une seconde partie étroite 126b qui débouche par un passage 127 vers l'orifice d'entrée 104. La partie large d'alésage 126a est fermée de manière étanche à son extrémité, côté tête du plongeur, par un bouchon 128. Un noyau cylindrique 130 étagé, formé de deux sections 130a, 130b séparées par un rétrécissement 130c, est monté dans l'alésage étagé et traversé par un passage axial 132. La section inférieure 130b du noyau est appliquée contre un joint d'étanchéité 129 en fond de la section inférieure 126b de l'alésage. Enfin, le plongeur comprend un passage radial 134 face au rétrécissement 130c du noyau et débouchant dans la chambre 113.

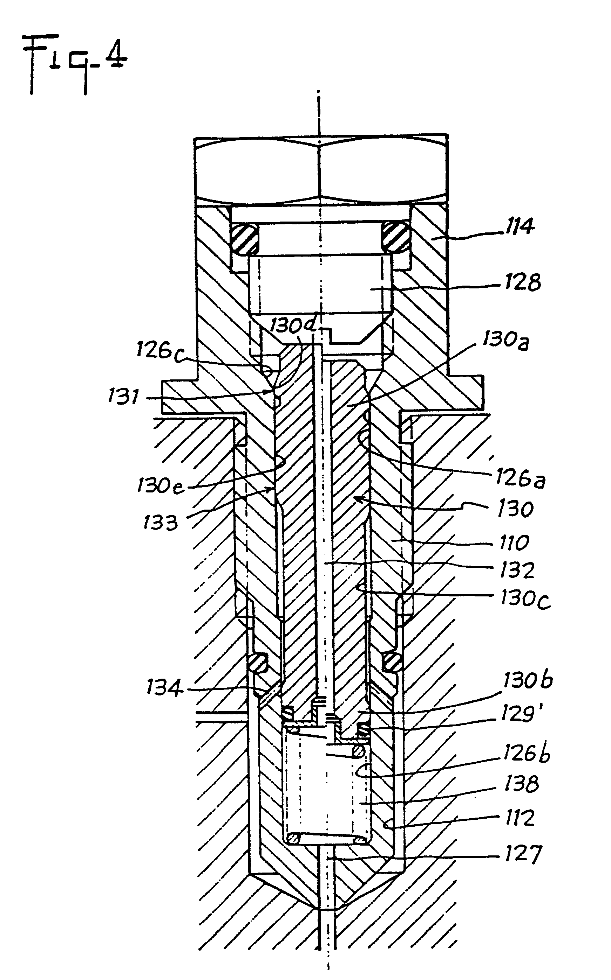

Selon un premier mode de réalisation, la partie d'alésage 126a du plongeur et la section 130a du noyau cylindrique 130 sont usinées avec précision afin de définir entre eux un jeu annulaire calibré 131 (fig. 3a) par lequel s'établit un débit de fuite permanent et prédéterminé le fluide empruntant successivement l'orifice d'entrée 104, le passage 127 du plongeur, le passage axial 132 du noyau, le jeu annulaire calibré 131 entre le noyau et l'alésage 126a, le passage radial 134 du plongeur, la chambre 113 puis l'orifice de sortie 106.

Grâce à un choix approprié des diamètres de l'alésage 126a et 130a, donc du jeu calibré 131, le débit de fuite est maintenu à une valeur nettement inférieure au débit de refoulement de la pompe afin de ne pas augmenter exagérément la fréquence de remise en route de la pompe lorsque le véhicule ainsi équipé est en fonctionnement, tout en permettant une vidange du circuit sous pression et de l'accumulateur en un temps raisonnable, c'est-à-dire compris entre quelques dizaines de minutes et quelques heures, lorsque le véhicule n'est pas en fonctionnement.

Le jeu calibré entre le noyau 130a et l'alésage 126a peut être ménagé de différentes manières. Comme illustré en coupe figure 3b, le noyau et l'alésage sont usinés et assemblés sans jeu, la fuite de liquide étant assurée grâce à une ou plusieurs rainures 133 usinées avec précision autour du noyau, soit longitudinalement, soit en hélice.

En effet, dans le cas d'un jeu annulaire 131 (fig. 3a), la vitesse d'écoulement du liquide est faible et risque de conduire à des colmatages en raison des impuretées habituellement contenues dans les liquides utilisés dans les circuits hydrauliques.

Dans le cas de rainures 133 (fig. 3b), la section des rainures est supérieure, ce qui évite des colmatages intempestifs.

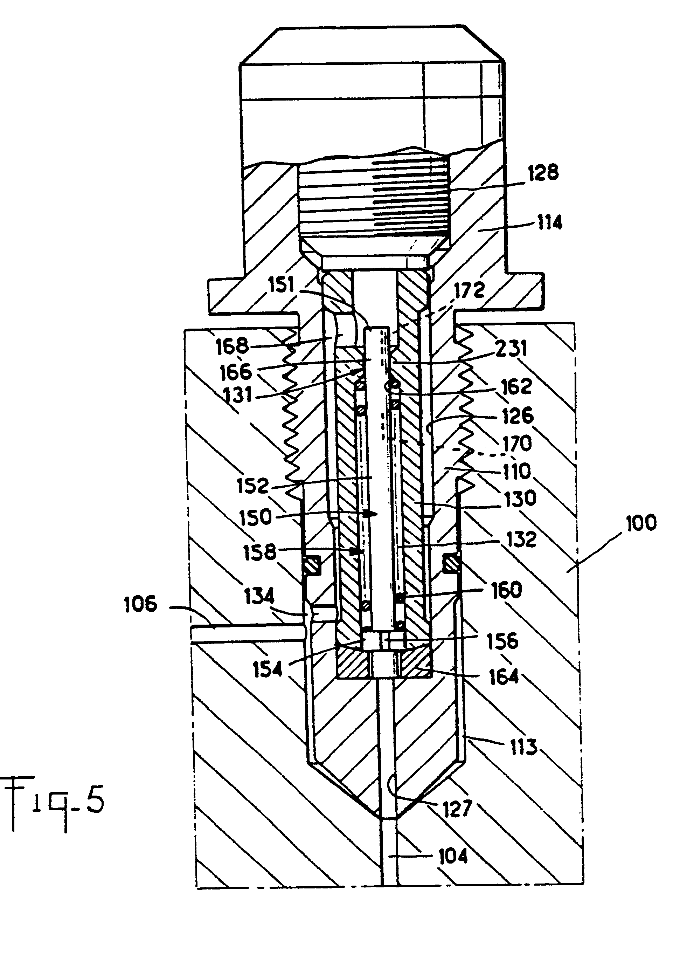

Le deuxième mode de réalisation illustré figure 4 est essentiellement semblable au premier et les mêmes références seront utilisés pour y désigner les mêmes éléments.

Dans ce cas, le noyau 130 est monté mobile dans l'alésage 126 au lieu d'être monté fixe comme dans le cas précédent. La section inférieure 130b du noyau est pourvue d'un joint d'étanchéité 129' vis-à-vis de la section inférieure 126b de l'alésage.

Un ressort de rappel 138 est interposé entre le fond de l'alésage 126 et le noyau 130 afin de repousser ce dernier en butée contre le bouchon 128.

La première section 130a du noyau comporte deux portées successives, une première portée 130d usinée avec précision afin de ménager par rapport à l'alésage 126a un jeu annulaire calibré 131 de fuite, puis une seconde portée 130e reçue dans l'alésage avec un jeu négligeable simplement nécessaire au guidage et au coulissement dans l'alésage, et pourvue de rainures longitudinales 133 permettant sensiblement un libre écoulement de liquide en direction de la zone d'alésage comprise entre les deux sections 126b et 126a et dans laquelle débouche le passage radial 134 du plongeur.

Ainsi, en l'absence de pression a l'orifice d'entrée, le noyau est repoussé en direction du bouchon 128, comme illustré sur la moitié gauche de la figure. Lorsque la pression du liquide à l'orifice d'entrée augmente, on observe qu'elle engendre une force dirigée vers le haut sur la section inférieure 130b du noyau et une force supérieure à la précédente, dirigée vers le bas sur la section supérieure 130a du noyau.

A un certain seuil de pression, la force résultante dépasse la force du ressort 138 et le noyau 130 se déplace vers le bas, comme illustré sur la moitié de droite de la figure.

Grâce a cet arrangement, la portée 130d du noyau est périodiquement déplacée par rapport à l'alésage 126a, ce qui assure un nettoyage mécanique de l'intervalle qui les sépare et évite son encrassement.

Selon une dernière particularité de ce mode de réalisation, l'alésage 126a comporte un évasement 126c, au voisinage du bouchon, tel que la portée 130d du noyau vient au moins partiellement déboucher dans cet évasement lorsque le noyau est repoussé par le ressort contre le bouchon 128. Ainsi, lorsque le véhicule est à l'arrêt, la fuite initiale de liquide entre la portée 130d du noyau et l'alésage 126a déterminera une chute de pression relativement lente, puis lorsque cette pression aura diminué au-dessous du seuil à partir duquel le ressort repousse le noyau contre le bouchon, la fuite s'accélèrera du fait que la portée 130d vient dépasser dans l'évasement de l'alésage 126c et la chute de pression s'accélèrera.

Outre l' intérêt de ramener plus rapidement la pression à une valeur faible pour laquelle la membrane de l'accumulateur du circuit hydraulique n'est pratiquement plus en contact avec le liquide, cette disposition permet, dans le dispositif de fuite, de compléter le nettoyage mécanique de la zone active de fuite, c'est-à-dire le jeu calibré entre la portée 130d du noyau et la section d'alésage 126a, par un nettoyage hydraulique, grâce à l'effet de "chasse" résultant de l'augmentation du débit de fuite.

En référence maintenant au mode de réalisation représenté Figure 5, le dispositif de fuite comprend, comme précédemment, un corps 100, une chambre 113 dans ce corps, un orifice d'entrée 104 destiné à être relié à un circuit hydraulique sous pression qui comprend l'accumulateur à membrane, un orifice de sortie 106 destiné à être relié à un réservoir basse pression de ce même circuit et un plongeur 110 monté dans la chambre.

Le plongeur 110 comprend un alésage 126, ainsi qu'un passage d'entrée 127 communiquant avec l'orifice d'entrée 104 du corps 100, et un passage de sortie 134 latéral communiquant avec l'orifice de sortie 106 via la chambre 113.

Un noyau 130 est reçu dans l'alésage 126 et maintenu au fond de celui-ci par un bouchon 128 vissé dans la tête 114 du plongeur 110. Le noyau 130 est percé d'un passage axial 132 qui présente un rétrécissement local calibré 231. Une tige cylindrique 150 est montée coulissante dans le passage axial 132 ; elle comporte un fût 152 calibré également, traversant le rétrécissement calibré 231 du passage axial de telle sorte qu'un jeu calibré de fuite 131 se trouve défini entre le fût et le rétrécissement. Ce jeu calibré peut être variable en fonction de la course de la tige 152.

A son extrémité proche de l'orifice d'entrée 104, la tige cylindrique comporte une tête de guidage 154 dans le passage axial 132, cette tête présentant au moins une entaille latérale 156, permettant un libre passage du fluide depuis l'orifice d'entrée 127, 104 vers la zone annulaire 158 comprise entre le fût 152 et le passage axial 132.

Un ressort 160 entoure le fût 152 et prend appui, d'une part, sur un épaulement 162 du noyau 130 adjacent au rétrécissement 131 et, d'autre part, sous la tête 154 afin de repousser la tige 150 en direction de l'orifice d'entrée (127, 104).

Ce dernier dispositif fonctionne de la manière suivante :

En l'absence de pression à l'orifice d'entrée, le ressort 160 repousse la tige 150 dans la position représentée Figure 5, la tête 154 venant en butée contre une bague d'arrêt 164 servant par ailleurs à assurer l'étanchéité entre le plongeur 110 et le noyau 130.

Dans cette position, le fût 152 de la tige présente une première zone 166 en coïncidence avec le rétrécissement 231 du passage axial du noyau.

Lorsque la pression du fluide à l'orifice d'entrée augmente, cette pression s'établit dans le passage d'entrée 127, puis via l'entaille latérale 156 de la tête 154, dans la zone annulaire 158 entre le fût de la tige et le passage axial du noyau.

Etant donné que le fût 152 et le rétrécissement 231 du noyau 130 sont séparés par un jeu calibré de fuite 131 de faible section, le fluide s'écoule par ce jeu en subissant une chute de pression importante, et l'extrémité 151 du fût qui fait saillie au-delà du rétrécissement est pratiquement soumise à la pression qui règne à l'orifice de sortie 106 (via la chambre 113, le passage radial, et l'alésage 126 du plongeur, puis le passage latéral 168 du noyau).

Lorsque la force ainsi exercée sur la tige en raison de la pression différentielle de part et d'autre du rétrécissement 231 dépasse la force de rappel du ressort 160, la tige se déplace jusqu'à venir en butée contre le bouchon 128, et la zone du fût en coïncidence avec le rétrécissement se déplace jusqu'à une seconde zone 170 indiquée en pointillés figure 5.

Grâce à ce déplacement du fût de la tige par rapport au rétrécissement du passage axial, il se produit un balayage mécanique du jeu calibré qui les sépare, et l'on évite ainsi tout encrassement qui entrainerait à terme une diminution du débit de fuite.

On notera que le dispositif est particulièrement simple à réaliser puisque seuls le fût de la tige et le rétrécissement du noyau nécessitent un usinage de précision par des techniques courantes.

Enfin, dans le but de ménager une fuite variable, analogue à celle du mode de réalisation représenté Figure 4, on pourra prévoir un amincissement localisé 172 à l'extrémité du fût, comme illustré en pointillés Figure 5, se terminant dans la zone 166 du fût située en regard du rétrécissement 231 lorsque la tige 150 occupe sa position de repos. Ainsi, lorsque la pression chute au-dessous d'un seuil prédéterminé, la tige retourne à sa position de repos sous l'action du ressort et la fuite de liquide s'accélère.

Bien qu'il ait été fait référence dans l'introduction de la présente description à un circuit hydraulique destiné à un véhicule automobile, on comprendra que la présente invention s'applique à tout circuit hydraulique sous pression comprenant un accumulateur à membrane.

On comprendra également que, dans les modes de réalisation où le jeu calibré est obtenu par des rainures, celles-ci pourront être ménagées dans l'alésage et non autour du noyau.

## Revendications

1. Dispositif de fuite destiné à la mise en oeuvre d'un procédé de vidange d'un accumulateur (22) à membrane (28) dont la membrane est susceptible de s'appliquer contre au moins une partie de la paroi interne de l'accumulateur en l'absence de pression, ledit accumulateur étant disposé dans un circuit hydraulique (10, 18, 16, 20) comprenant un réservoir à basse pression (10), une pompe (12) puisant le liquide dans le réservoir pour alimenter un circuit sous pression comprenant ledit accumulateur, procédé selon lequel on maintient une fuite (32) dudit liquide depuis ledit circuit vers ledit réservoir à basse pression (10), sous un débit prédéterminé, caractérisé en ce qu'il comprend un corps (100) pourvu d'une chambre (113), un orifice d'entrée (104) destiné à être relié au circuit hydraulique, un orifice de sortie (106) destiné à être relié au réservoir à basse pression et un plongeur (110) monté dans ladite chambre, le plongeur comprenant des moyens calibrés (131 ; 133) définissant un trajet de fuite entre l'orifice d'entrée et l'orifice de sortie.

2. Dispositif selon la revendication 1, caractérisé en ce que ledit plongeur (110) comprend un alésage (126) et des passages (127, 134), en communication avec ledit orifice d'entrée et ledit orifice de sortie, et un noyau (130) reçu dans ledit alésage, ledit passage de fuite (131 ; 133) étant ménagé entre une section (126a) dudit alésage et une section (130a) dudit noyau.

3. Dispositif selon la revendication 2, caractérisé en ce que ladite section d'alésage et ladite section de noyau présentent des diamètres précis afin de maintenir entre elles un jeu calibré (131) de fuite.

4. Dispositif selon la revendication 2, caractérisé en ce que ladite section (130a) de noyau est reçue sans jeu dans ledit alésage (126a) et que le noyau comporte au moins une rainure (133) de fuite calibrée.

5. Dispositif selon la revendication 4, caractérisé en ce que ladite rainure (133) s'étend longitudinalement le long du noyau (130).

6. Dispositif selon la revendication 4, caractérisé en ce que ladite rainure (133) s'étend en hélice autour du noyau (130).

7. Dispositif selon l'une quelconque des revendications 1 à 6, caractérisé en ce que ledit noyau comporte deux sections (130a, 130b) séparées par une partie rétrécie (130c) et reçues dans deux sections étagées dudit alésage (126a, 126b), l'une des sections de noyau étant reçue à joint étanche (129 ; 129') dans la section correspondante de l'alésage, et l'autre section de noyau formant avec la section correspondante de l'alésage ledit passage de fuite (131 ; 133).

8. Dispositif selon la revendication 7, caractérisé en ce que ledit noyau est monté fixe dans l'alésage.

9. Dispositif selon la revendication 7, caractérisé en ce que ledit noyau est percé axialement d'un passage (132) en communication avec l'orifice d'entrée (127, 104).

10. Dispositif selon la revendication 9, caractérisé en ce que le noyau (130) est monté coulissant dans l'alésage entre deux positions et rappelé par un ressort (138) vers l'une desdites positions, dite position de repos.

11. Dispositif selon la revendication 10, caractérisé en ce que ledit alésage comporte un évasement (126c) et que ledit noyau dépasse au moins partiellement dans ledit évasement lorsqu'il occupe sa position de repos.

12. Dispositif selon la revendication 11, caractérisé en ce que ledit noyau comporte deux portées contigües, l'une (130e) coulissant sans jeu dans l'alésage et pourvue de rainures d'écoulement et l'autre (130d) séparée de l'alésage par un jeu calibré de fuite.

13. Dispositif selon la revendication 1, caractérisé en ce qu'il comprend une tige montée (150) dans le plongeur (110) et en ce que le trajet de fuite est défini entre ladite tige (150) et une zone rétrécie (231) d'un passage axial (132) intérieur au plongeur.

14. Dispositif selon la revendication 13, caractérisé en ce que le plongeur (110) comprend un alésage (126) et des passages (127, 134) en communication avec ledit orifice d'entrée (104) et ledit orifice de sortie (106), et un noyau (130) reçu dans ledit alésage (126), ledit passage axial (132) étant ménagé dans ledit noyau (130) et ladite tige (150) étant montée dans ledit noyau (130).

15. Dispositif selon la revendication 14, caractérisé en ce que ladite tige (150) est montée coulissante dans le noyau.

16. Dispositif selon la revendication 15, caractérisé en ce que la tige (150) comprend une tête de guidage (154) dans le passage axial (132)et un fût (152) traversant ledit rétrécissement (231) du passage axial.

17. Dispositif selon la revendication 16, caractérisé en ce qu'il comporte un ressort (160) interposé entre ladite tête (154) de la tige (150) et un épaulement intérieur (162) audit noyau (130), rappelant la tige en direction de l'orifice d'entrée (104).

## Ansprüche

1. Abflußvorrichtung, die in einem Verfahren zum Leeren eines Membranspeichers (22, 28) zum Einsatz kommt, wobei sich die Membran bei Abwesenheit eines Druckes wenigstens an einen Teil der Innenwand des Speichers anlegen kann, wobei der Speicher in einem Hydraulikkreis (10, 18, 16, 20) angeordnet ist, der einen Niederdruckbehälter (10) und eine Pumpe (12), die zur Versorgung eines den Speicher umfassenden Druckleitungssystems Flüssigkeit aus dem Behälter pumpt, aufweist, und wobei gemäß dem Verfahren ein Abfluß (32) der Flüssigkeit mit einer vorgegebenen Rate vom Leitungssystem zum Niederdruckbehälter (10) aufrechterhalten wird, dadurch gekennzeichnet, daß sie einen mit einer Kammer (113) versehenen Körper (100), eine der Verbindung mit dem Hydraulikkreis dienenden Einlaßöffnung (104), eine der Verbindung mit dem Niederdruckbehälter dienenden Auslaßöffnung (106) und einen in der Kammer angebrachten Tauchkolben (110) umfaßt, wobei der Tauchkolben Kalibrierungsmittel (131 ; 133) aufweist, die zwischen der Einlaßöffnung und der Auslaßöffnung einen Abflußweg bestimmen.

2. Vorrichtung gemäß Anspruch 1, dadurch gekennzeichnet, daß der Tauchkolben (110) eine Bohrung (126) und Durchlässe (127, 134), die mit der Einlaßöffnung und der Auslaßöffnung in Verbindung stehen, und einen von der Bohrung aufgenommenen Kern (130) umfaßt, wobei der Abflußweg (131 ; 133) zwischen einem Abschnitt (126a) der Bohrung und einem Abschnitt (130a) des Kerns vorgesehen ist.

3. Vorrichtung gemäß Anspruch 2, dadurch gekennzeichnet, daß der Abschnitt der Bohrung und der Abschnitt des Kerns genau bemessene Durchmesser besitzen, um zwischen ihnen ein Kalibrierspiel (131) des Abflusses aufrechtzuerhalten.

4. Vorrichtung gemäß Anspruch 2, dadurch gekennzeichnet, daß der Abschnitt (130a) des Kerns in der Bohrung (126a) ohne Spiel aufgenommen wird und daß der Kern wenigstens eine Abflußkalibrierungsrille (133) umfaßt.

5. Vorrichtung gemäß Anspruch 4, dadurch gekennzeichnet, daß sich die Rille (133) in Längsrichtung entlang des Kerns (130) erstreckt.

6. Vorrichtung gemäß Anspruch 4, dadurch gekennzeichnet, daß sich die Rille (133) spiralförmig um den Kern (130) erstreckt.

7. Vorrichtung gemäß einem der Ansprüche 1 bis 6, dadurch gekennzeichnet, daß der Kern zwei Abschnitte (130a, 130b) umfaßt, die durch einen eingeschnürten Teil (130c) voneinander getrennt sind und in zwei gestuften Abschnitten der Bohrung (126a, 126b) aufgenommen werden, wobei einer der Abschnitte des Kerns im entsprechenden Abschnitt der Bohrung in dichter Verbindung (129 ; 129') aufgenommen wird und der andere Abschnitt des Kerns mit dem entsprechenden Abschnitt der Bohrung den Abflußweg (131 ; 133) bildet.

8. Vorrichtung gemäß Anspruch 7, dadurch gekennzeichnet, daß der Kern fest in der Bohrung angebracht ist.

9. Vorrichtung gemäß Anspruch 7, dadurch gekennzeichnet, daß den Kern in axialer Richtung ein mit der Einlaßöffnung (127, 104) in Verbindung stehender Durchlaßweg (132) durchläuft.

10. Vorrichtung gemäß Anspruch 9, dadurch gekennzeichnet, daß der Kern (130) in der Bohrung zwischen zwei Positionen gleitfähig angebracht ist und von einer Feder (138) in eine dieser Positionen, die mit Ruheposition bezeichnet wird, rückgestellt wird.

11. Vorrichtung gemäß Anspruch 10, dadurch gekennzeichnet, daß die Bohrung eine Aufweitung (126c) umfaßt und daß der Kern wenigstens teilweise in die Aufweitung hineinragt, wenn er sich in seiner Ruheposition befindet.

12. Vorrichtung gemäß Anspruch 11, dadurch gekennzeichnet, daß der Kern zwei aneinandergrenzende Auflageflächen umfaßt, von denen eine (130e) ohne Spiel in der Bohrung gleitet und mit Strömungsrillen versehen ist und die andere (130d) von der Bohrung durch ein Abfluß-Kalibrierungsspiel getrennt ist.

13. Vorrichtung gemäß Anspruch 1, dadurch gekennzeichnet, daß sie einen im Tauchkolben (110) angebrachten Stift (150) umfaßt und daß der Abflußweg zwischen dem Stift (150) und einer eingeschnürten Zone (231) eines im Inneren des Tauchkolbens axial verlaufenden Durchlaßweges (132) definiert ist.

14. Vorrichtung gemäß Anspruch 13, dadurch gekennzeichnet, daß der Tauchkolben (110) eine Bohrung (126) und Durchlaßwege (127, 134), die mit der Einlaßöffnung (104) und der Auslaßöffnung (106) in Verbindung stehen, und einen in der Bohrung (126) aufgenommenen Kern (130) umfaßt, wobei der axiale Durchlaßweg im Kern (130) vorgesehen und der Stift (150) im Kern (130) angebracht ist.

15. Vorrichtung gemäß Anspruch 14, dadurch gekennzeichnet, daß der Stift (150) im Kern gleitfähig angebracht ist.

16. Vorrichtung gemäß Anspruch 15, dadurch gekennzeichnet, daß der Stift (150) einen Kopf (154) zur Führung im axialen Durchlaßweg (132) und einen durch die Einschnürung (231) des axialen Durchlaßweges verlaufenden Schaft (152) umfaßt.

17. Vorrichtung gemäß Anspruch 16, dadurch gekennzeichnet, daß sie eine Feder (160) umfaßt, die zwischen dem Kopf (154) des Stiftes (150) und einer inneren Schulter (162) des Kerns (130) eingesetzt ist und den Stift in Richtung der Einlaßöffnung (104) zurückstellt.

## Claims

1. Leakage device intended for the application of a process for emptying a diaphragm accumulator (22) whose diaphragm (28) is adapted to be applied against at least a part of the inside wall of the accumulator in the absence of pressure, said accumulator being disposed in a hydraulic circuit (10, 18, 16, 20) including a low-pressure reservoir (10), and a pump (12) pumping the liquid from the reservoir to feed a pressurized circuit including said accumulator, process according which a leak (32) of said liquid from said circuit to said low-pressure reservoir (10) is maintained with a predetermined rate of flow, said leakage device being characterized in that it comprises a body (100) provided with a chamber (113), an inlet aperture (104) intended for connection to the hydraulic circuit, an outlet aperture (106) intended for connection to the low-pressure reservoir, and a plunger (110) mounted in said chamber, the plunger being provided with calibrated means (131 ; 133) defining a leak path between the inlet aperture and the outlet aperture.

2. Device according to Claim 1, characterized in that said plunger (110) has a bore (126) and passages (127, 134) in communication with said inlet aperture and said outlet aperture, and a core (130) received in said bore, said leak passage (131 ; 133) being provided between a section (126a) of said bore and a section (130a) of said bore.

3. Device according to Claim 2, characterized in that said section of the bore and said section of the core have precision diameters in order to maintain between them a calibrated leak clearance (131).

4. Device according to Claim 2, characterized in that said section (130a) of the core is received without clearance in said bore (126a) and that the core has at least one calibrated leak groove (133).

5. Device according to Claim 4, characterized in that said groove (133) extends longitudinally along the core (130).

6. Device according to Claim 4, characterized in that said groove (133) extends helically around the core (130).

7. Device according to any one of Claims 1 to 6, characterized in that said core comprises two sections (130a, 130b) separated by a narrowed portion (130c) and received in two stepped sections (126a, 126b) of said bore, one of the core sections being received sealingly (129 ; 129') in the corresponding section of the bore, and the other core section forming with the corresponding section of the bore said leak passage (131 ; 133).

8. Device according to Claim 7, characterized in that said core is mounted fixed in the bore.

9. Device according to Claim 7, characterized in that said core has extending axially through it a passage (132) in communication with the inlet aperture (127, 104).

10. Device according to Claim 9, characterized in that the core (130) is mounted in the bore for sliding between two positions and is returned by a spring (138) to one of said positions, called the position of rest.

11. Device according to Claim 10, characterized in that said bore has a bell mouth (126c) and that said core passes at least partially into said bell mouth when it is in its position of rest.

12. Device according to Claim 11, characterized in that said core has two contiguous bearing surfaces, one of them (130e) sliding without clearance in the bore and provided with flow grooves and the other (130d) separated from the bore by a calibrated leak clearance

13. Device according to Claim 1, characterized in that it comprises a rod (150) mounted in the plunger (110), and in that the leakage path is defined between said rod (150) and a narrowed zone (231) of an axial passage (132) located inside the plunger.

14. Device according to Claim 13, characterized in that the plunger (110) comprises a bore (126) and passages (127, 134) in communication with said inlet port (104) and said outlet port (106), and a core (130) received in said bore (126), said axial passage (132) being formed in said core (130), and said rod (150) being mounted in said core (130).

15. Device according to Claim 14, characterized in that the said rod (150) is mounted slidably in the core.

16. Device according to Claim 15, characterized in that the rod (150) comprises a guide head (154) in the axial passage (132) and a shank (152) passing through said narrowed portion (231) of the axial passage.

17. Device according to Claim 16, characterized in that it possesses a spring (160) which is interposed between said head (154) of the rod (150) and a shoulder (162) located inside said core (130) and which returns the rod in the direction of the inlet port (104).

Fig.1

Fig.3a

Fig.3b

# Fig.2

Fig-4

Fig-5